# EUROPÄISCHE PATENTSCHRIFT

(11) **EP 0 955 268 B1**
(45) Veröffentlichungstag und Bekanntmachung des Hinweises auf die Patenterteilung: **20.11.2002**
(21) Anmeldenummer: 99107953.4
(22) Anmeldetag: 22.04.1999
(51) Int. Cl.: C02F 1/00, B01D 35/143

(54) **Wasserreinigungsvorrichtung mit Mitteln zur Anzeige der Erschöpfung des Reinigungsmittels**
Water treatment device with means for indicating the depletion of the purifying agent
Dispositif de traitement de l'eau avec des moyens d'indication de l'épuisement du matériau purifiant

(30) Priorität: 29.04.1998 DE 19819098
(43) Veröffentlichungstag der Anmeldung: 10.11.1999
(73) Patentinhaber: Brita GmbH, 65232 Taunusstein (DE)
(72) Erfinder: Hofmann, Uwe, 65321 Heidenrod (DE); Fischer, Erik, 61479 Glashütten (DE)
(74) Vertreter: Weber-Bruls, Dorothée, Dr.

(56) Entgegenhaltungen:
- EP-A- 0 891 952
- WO-A-96/13318
- DE-A- 3 814 683
- GB-A- 2 257 429
- GB-A- 2 288 529

## Beschreibung

Die Erfindung betrifft eine Wasserreinigungsvorrichtung mit einer Auffangkanne für gereinigtes Wasser, in der ein Trichter mit einer mit Reinigungsmittel gefüllten Filterpatrone lösbar eingesetzt und die oben mit einem Deckel verschließbar ist, wobei am Deckel Mittel zum Abnehmen des Deckels und Mittel zur Anzeige der Erschöpfung des Reinigungsmittels angeordnet sind.

Aus dem deutschen Patent 38 14 683 ist bereits eine Wasserreinigungsvorrichtung der vorstehend genannten Art bekannt. Es ist danach auch bekannt, daß häufig der Endverbraucher und Benutzer einer solchen Wasserreinigungsvorrichtung das Reinigungsmittel nicht rechtzeitig ersetzt. Beispielsweise haben die häufig verwendeten Ionenaustauscher eine Kapazität zur Reinigung von etwa 60 - 100 Liter Wasser. Im normalen Haushalt kann also mit einer Wasserreinigungsvorrichtung oder -aufbereitungsvorrichtung der eingangs bezeichneten Art ein einwandfreier und hygienischer Betrieb für eine Zeit von zum Beispiel einem Monat mit ein und demselben Reinigungsmittel betrieben werden. Aus hygienischen Gründen sollte aber das Reinigungsmittel, zum Beispiel der lonenaustauscher oder ein Gemisch mit diesem, nicht sehr viel länger als die angegebene Lebensdauer in Benutzung sein. Danach sollte das Reinigungsmittel ausgewechselt werden. Es war also schon damals wünschenswert, eine Anzeige vorzusehen, um einen Zeitbezug zu finden und das Reinigungsmittel rechtzeitig austauschen zu können.

Es spielte das Entlüftungsproblem bei früheren und auch bei Filterpatronen der in dem vorgenannten Patent beschriebenen Art eine Rolle, so daß ein schirmartiger Aufsatz vorgesehen wurde, durch welchen dem Endverbraucher wenigstens auf mechanische Weise Mittel an die Hand gegeben wurden, damit der Endverbraucher erkennen konnte, wann eine voreingestellte Zeit abgelaufen war, d.h. wann erwartungsgemäß das Reinigungsmittel in der Filterpatrone erschöpft ist. Der schirmartig ausgestaltete Aufsatz war mit einer Lochscheibe versehen, bei welcher jedes Loch einem Monat des Jahres zugeordnet war. Der Endverbraucher kann zu Beginn der Inbetriebnahme einen Zeiger, zum Beispiel einen an einem Band befestigten Stopfen, In ein bestimmtes Loch stecken, um sich selbst dann später zu erinnem, wann spätestens das Reinigungsmittel in der Filterpatrone erschöpft sein dürfte. Mit Nachteil was es aber in das Belieben des Endverbrauchers gestellt, den Stopfen in eines der zahlreichen Löcher zu setzen. Mit Nachteil konnte es auch passieren, daß der Stopfen aus dem zuvor richtig bestimmten Loch herausgestoßen wurde (zum Beispiel beim Gebrauch), und daß dann der tatsächliche Zeitpunkt für das Auswechseln der Filterpatrone nicht bekannt war.

Es sind auch schon Versuche unternommen worden, diese mechanischen Mittel durch elektronische Anzeigen zu ersetzen. Dabei hat man in ein Anzeigegerät einen Reedschalter eingebaut, der mit einem am Rand der Auffangkanne oder dergleichen angeordneten Magneten in Wechselwirkung dahingehend gebracht werden soll, daß bei jedem Abnehmen des Deckels das Magnetfeld unterbrochen und der Reedschalter betätigt wird, so daß eine Art indirekte Volumenmessung, gegebenenfalls auch gekoppelt mit einer Zeitmessung, Hinweise auf den Erschöpfungszustand des Reinigungsmittels gegen kann. Mit Nachteil wird die bis zur Erschöpfung des Reinigungsmittels zur Verfügung stehende Zeit aber bei jedem Abheben des Deckels bzw. Aufsetzen verkürzt, d.h. dieses im Versuch befindliche Anzeigegerät zählt auch bei Bewegungen des Reedschalters relativ zu dem Magneten. Schon wenn der Deckel gedreht wird, kann eine Zählung in unbeabsichtigter Weise erfolgen. Bei diesem Versuchsaufbau sollte man auch das Anzeigegerät mit dem Reedschalter in Wirknähe des Magneten anordnen. Es bot sich bei einer Ausführungsform an, das Anzeigegerät im Deckelrand zu befestigen.

Um von diesen Beschränkungen frei zu sein, liegt der Erfindung die Aufgabe zugrunde, die Wasserreinigungsvorrichtung der eingangs beschriebenen Art dahingehend zu verbessern, daß eine preiswerte, gut zu erkennende und funktionssichere Anzeige für den Erschöpfungszustand des Reinigungsmittels gegeben ist.

Gemäß der Erfindung wird diese Aufgabe dadurch gelöst, daß das Erschöpfungsanzeigemittel ein in einer Öffnung in der Deckeloberfläche eingesetztes und unverlierbar befestigtes Anzeigegerät ist, dessen Anzeigefeld von außen oben sichtbar ist und das mittels einer elektronischen, batteriegetriebenen Schaltung nur den jeweiligen Zustand der abgelaufenen Zeit darstellt, ohne mit separaten Signalgebern zusammenzuwirken. Ohne Verfälschungen durch bedeutungslose Bewegungen des Deckels gegenüber dem Trichter oder der Auffangkanne wird bei der neuen Wasserreinigungsvorrichtung eine Anzeige des Erschöpfungszustandes des Reinigungsmittels vorgesehen, die allein auf die Zeit bezogen ist. Der Hersteller des Reinigungsmittels kennt aus dessen Zusammensetzung und der Menge oder auch zum Beispiel dem Härtegrad des Wassers diejenige Zeit, über welche das Reinigungsmittel hinweg in der vorgegebenen Filterpatrone die gewünschte Wirkung entfaltet. Handelt es sich hierbei um einen Monat, dann wird durch das Anzeigegerät nach der neuen Erfindung dieser eine Monat dargestellt, zum Beispiel in eine Vielzahl von Segmenten unterteilt, um dem Betrachter zu signalisieren, daß ein bestimmter und erkennbarer Bruchteil dieser Zeit abgelaufen ist.

Durch die elektronische Schaltung in dem Anzeigegerät ist man bei der Wasserreinigungsvorrichtung gemäß der Erfindung von mechanischen Teilen und deren Verschleiß unabhängig, denn es gibt auch schon mechanische Meßuhren oder Schieber, die in Abhängigkeit von dem Öffnen des Ausgusses der Auffangkanne eine Zählung vornehmen und das Ergebnis dieser Zählung anzeigen. Erfindungsgemäß ist dies auf elektronischem Wege einfacher und preiswerter gelöst. Hinzu kommt, daß von dem Anzeigegerät separate Signalgeber nicht erforderlich sind. Die Anordnung des Anzeigegerätes gemäß der Erfindung ist mithin frei.

Bei vielen bekannten Wasserreinigungsvorrichtungen ist der Deckel auf seiner Oberseite, meistens in seiner zentralen Mitte, mit einem Greifknopf versehen. Zum Teil wird dieser zu Belüftungszwecken benutzt, zum Teil nur zum Ergreifen des Deckels. Besonders logisch, gut sichtbar und damit für den Endverbraucher besonders ansprechend ist im Falle eines runden Deckels seine Mitte. Viele bekannte Wasserreinigungsvorrichtungen haben daher den Greifknopf in der Mitte des Deckels. Eine Anordnung eines Reedschalters in der Mitte des Deckels kommt bei älteren Geräten auch schon deshalb nicht in Frage, weil der Abstand zu einem am Rand der Auffangkanne außen angeordneten Magneten zu groß wäre.

Erfindungsgemäß kann man sich durch die Loslösung von separaten Signalgebern, wie zum Beispiel Magneten und durch die Darstellung nur der Zeit aus den vorgenannten technischen Bindungen herauskommen. Erfindungsgemäß hat man deshalb vorgesehen, daß sich das oben am Anzeigegerät angebrachte Anzeigefeld in der Mitte der Deckeloberfläche befindet und die Mittel zum Abnehmen des Deckels von dem Trichter und/oder der Auffangkanne im Randbereich der Deckeloberfläche angeordnet sind. Deutlich sichtbar und für den Endverbraucher gut verständlich ist die Anordnung des Anzeigegerätes mit seinem Anzeigefeld bei dieser Ausführungsform der Erfindung in der Mitte der Deckeloberfläche. Irgendein Abstand des Anzeigegerätes von einem separaten Signalgeber braucht nicht berücksichtigt zu werden. Der Greifknopf als Mittel zum Abnehmen des Deckels kann bei dieser Ausführungsform entfallen, denn es sind im Randbereich der Deckeloberfläche anders gestaltete Mittel zum Abnehmen des Deckels vorgesehen. Zum Beispiel kann man die Deckeloberfläche über den Trichter oder den oberen Rand der Auffangkanne hinausragend ausgestalten. Der Endverbraucher kann dann über den Deckel greifen und ihn über den vorstehenden Rand abnehmen. Denkbar sind altemativ vom Rand abstehende Greifnasen, welche der Endbenutzer ebenfalls gut ergreifen oder auch durch den Tastsinn auffinden kann, um dann den Deckel abzunehmen. Zum einen gelingt durch diese Maßnahmen also eine praktische und leichte Handhabung der Wasserreinigungsvorrichtung, welche andererseits zugleich auch in der wichtigen Mittelposition deutlich sichtbar das Anzeigefeld des Anzeigegerätes hat.

Günstig ist es gemäß der Erfindung ferner, wenn das Mittel zum Abnehmen des Deckels in dem hinteren Deckelbereich in Form von beidseitigen Greifausnehmungen angeordnet ist. Es wurde vorn schon von "oben" und "unten" gesprochen. Dabei versteht sich, daß zu reinigendes Wasser oben in den Trichter eingegossen und unten in die Auffangkanne hinunterläuft. Insofern versteht es sich, daß der Boden der Auffangkanne unten und der Deckel oben angeordnet sind. Bei einer bevorzugten Ausführungsform hat die Auffangkanne an einem, dem sogenannten hinteren Ende einen Griff. Diesem gegenüber, nämlich am vorderen Ende, ist ein Ausguß angeordnet, der vorzugsweise mit einer kleinen Abdeckkappe versehen ist. Während der Benutzer die Auffangkanne über den Griff hinten anhebt, fließt also gereinigtes Wasser aus dem Ausguß vom heraus. Bei aufgesetztem Deckel endet letzterer vom vor dem Ausguß und hat einen hinteren Bereich, der sich bei der Ausführungsform mit dem Griff am hinteren Ende der Auffangkanne über den Griff oben ein Stück weit nach hinten erstreckt. In diesem Deckelbereich befindet sich beidseitig des mit dem Deckel einstückigen Teiles je eine Greifausnehmung, die sich vorzugsweise auch bis in den Griffbereich fortsetzen kann. Mit oder ohne Griff - in jedem Fall kann der Endverbraucher über die beiden Greifausnehmungen den hinteren Deckelbereich erfassen und über diesen den Deckel von dem Trichter und/oder der Auffangkanne abnehmen. Durch diese einfache Ausgestaltung des Abnahmemittels für den Deckel ist dessen Mittelbereich frei für die Anbringung des Anzeigegerätes in der oben beschriebenen Weise.

Zweckmäßig ist es erfindungsgemäß ferner, wenn das mit einem oberen Außenflansch versehene Anzeigegerät unter die Deckeloberfläche derart versenkt ist, daß das Anzeigefeld neben dem Außenflansch etwa bündig zu der Deckeloberfläche zu liegen kommt. Diese Anordnung des Anzeigegerätes sorgt für ein ansprechendes Äußeres der gesamten Wasserreinigungsvorrichtung, denn der erste Blick des Benutzers wird auf die Oberseite gelenkt, wo das Anzeigegerät sozusagen Blickfang ist. Die Deckeloberfläche kann mehr oder weniger groß sein bzw. der Abstand von der Mitte des Deckels zu irgendeinem Randbereich kann beliebig groß sein. Eine maximale Wirkstrecke gibt es bei dieser Ausführungsform der Erfindung nicht, denn es ist kein separater Signalgeber für die Signale im Anzeigefeld erforderlich.

Bei weiterer vorteilhafter Ausgestaltung der Erfindung ist innerhalb des rahmenförmigen Außenflansches neben dem Anzeigefeld eine Drucktaste angeordnet. Das gesamte Anzeigegerät kann groß genug ausgebildet sein, um ein gut sichtbares Anzeigefeld vorzusehen und daneben gleichwohl eine Drucktaste anzuordnen. Mit Hilfe der Drucktaste kann man in an sich bekannter Weise den Betriebsmodus verändern oder die Elektronik zurücksetzen. Zum Beispiel kann bei einer Ausführungsform nach Ablauf eines Zeitzyklus die Anzeige beendet sein, so daß man als Endbenutzer aufgefordert ist, die Filterpatrone und damit das Reinigungsmittel auszuwechseln und durch Drücken der Drucktaste die Zählung erneut zu starten. Vorzugsweise ist daher die Drucktaste mit dem Schriftzug "START" versehen.

Erfindungsgemäß kann man den Zustand der abgelaufenen Zeit femer durch in dem Anzeigefeld sichtbare Balken, Felder oder Zeichen darstellen, und eine Blinkanzeige kann vorgesehen sein. Es ist günstig, dem Betrachter in jedem Augenblick eines Meßzyklus die jeweils abgelaufene Zeit darzustellen. Dies gelingt bei einer bevorzugten Ausführungsform durch Aufteilen der Zeit in vier Teile zu je 25%. Das gesamte Feld wird damit in vier Unterfelder aufgeteilt, welche dem Betrachter zu Beginn der Zählung als vorhanden erscheinen; nach einem Viertel der Zeit zu einem Viertel verschwinden, bis nach Ablauf der gesamten Zeit alle vier Felder verschwunden sind. Es kann dann ein diese Unterteilungsfelder umgebender Rahmen blinken und dem Betrachter anzeigen, daß das Reinigungsmittel jetzt erschöpft ist, weil die Zeit abgelaufen ist, in welcher bei gewöhnlicher Benutzung das Reinigungsmittel verbraucht ist.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In diesen zeigen:
- Figur 1: eine Querschnittsansicht durch eine Wasserreinigungsvorrichtung mit Griff hinten und Ausguß vorne,
- Figur 2: eine Seitenansicht der Vorrichtung der Figur 1, wobei einige unsichtbare Kanten dargestellt sind und im oberen Griffbereich Ausnehmungen zum Abnehmen des Deckels im hinteren Deckelbereich innerhalb des strichpunktiert gezeichneten Kreises dargestellt sind,
- Figur 3: eine vergrößerte Ansicht der Einzelheit des gestrichelten Kreises in Figur 2,
- Figur 4: eine Draufsicht auf den Deckel, den Ausguß und den Griff der Wasserreinigungsvorrichtung der vorhergehenden Figuren,
- Figur 5: eine Querschnittsansicht des Anzeigegerätes in stark vergrößertem Maßstab,
- Figur 6: eine Draufsicht auf das Anzeigegerät in einem ersten Zustand der Anzeige,
- Figuren 7 bis 9: die gleiche Ansicht wie Figur 6, wobei jedoch ein zweiter bzw. dritter bzw. vierter Zustand im Anzeigefeld dargestellt ist,
- Figur 10: wiederum die gleiche Ansicht wie Figur 6, wobei jedoch eine andere Darstellung gezeigt ist und der schräge Pfeil das Blinken darstellt und
- Figur 11: eine ähnliche Darstellung wie Figur 10, wobei alle Anzeigen gelöscht sind und an der durch den Pfeil gekennzeichneten Stelle keine Anzeige zu sehen ist.

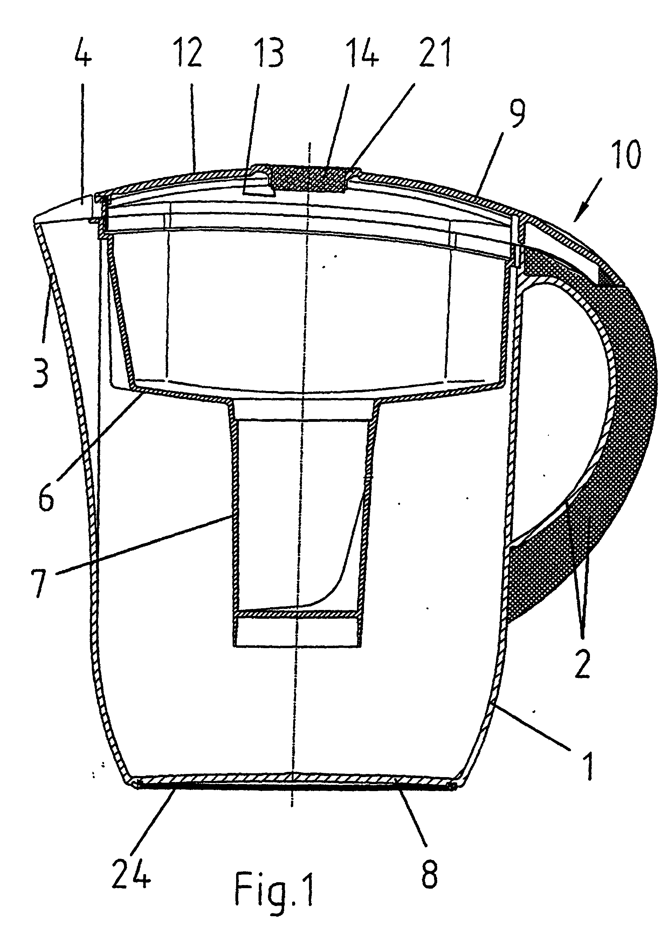

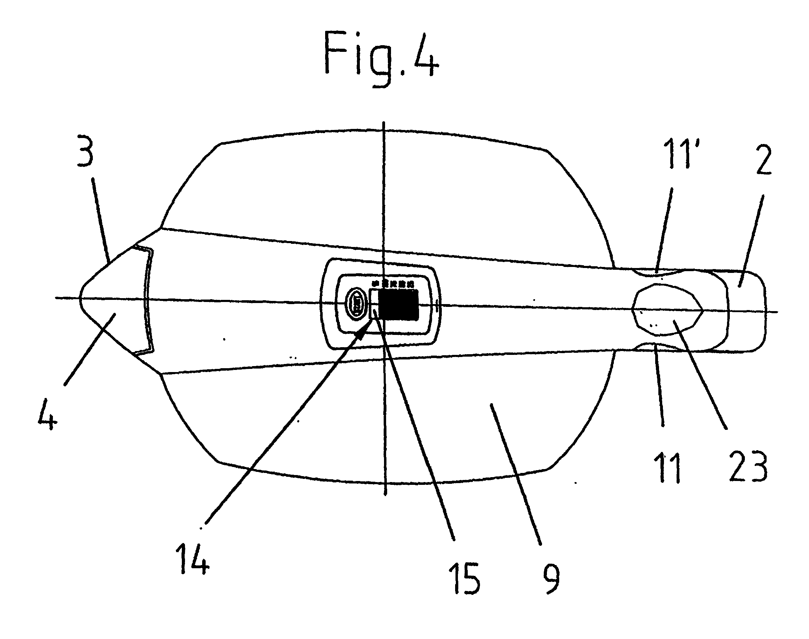

Die in den Figuren 1 bis 4 dargestellte Wasserreinigungsvorrichtung besteht aus Kunststoff und weist eine Auffangkanne 1 mit auf der Hinterseite angeordnetem Griff 2 auf. Auf der dem Griff 2 gegenüberliegenden, vorderen Seite befindet sich an der Auffangkanne 1 ihr Ausguß 3, der über eine Abdeckkappe 4 verschlossen ist, die über ein horizontal verlaufendes Scharnier 5 schwenkbar angebracht ist. Hebt der Benutzer die Auffangkanne 1 also über Ergreifen der Kanne mit Hilfe des Griffes 2 an, dann schwenkt die Abdeckkappe 4 zum Ausgießen des Wassers hoch und klappt danach wieder in die geschlossene Stellung zurück.

In der Auffangkanne 1 ist ein Trichter 6 lösbar am oberen Rand der Auffangkanne 1 eingesetzt. Der Trichter 6 verengt sich unten zu einer Hülse 7, in der eine nicht gezeigte Filterpatrone lösbar so eingesteckt werden kann, daß das oben in den Trichter 6 eingegossene, zu reinigende Wasser nur durch die Filterpatrone hindurchgelangen und nach unten fließen kann, wo das gereinigte Wasser nach Austritt aus der Hülse 7 über dem Boden 8 der Auffangkanne 1 gesammelt wird.

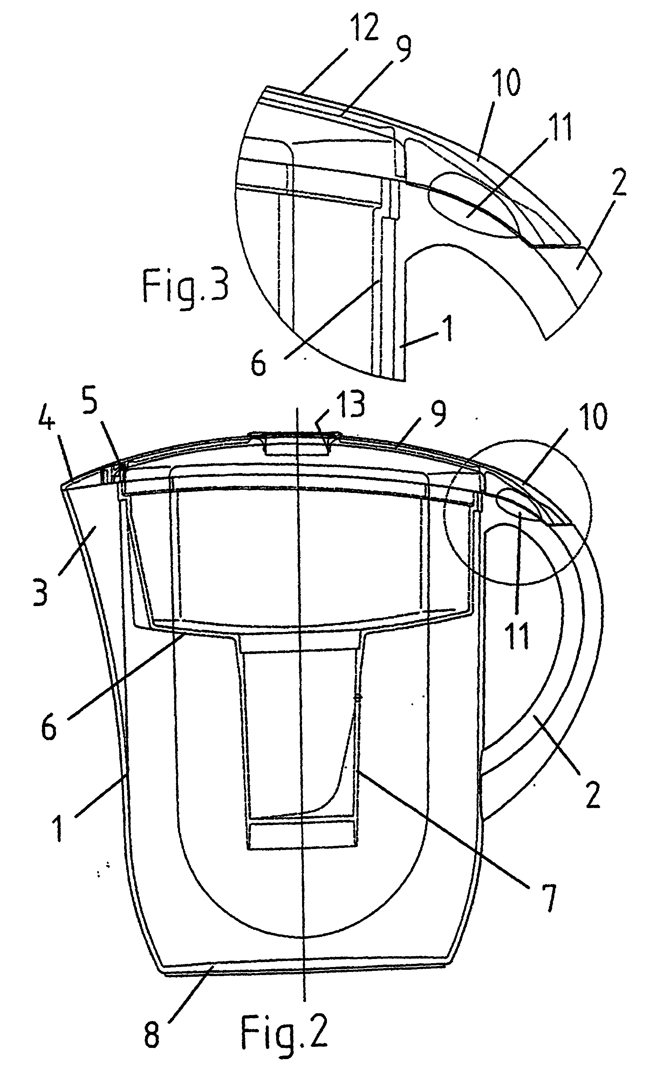

Oben, d.h. auf der dem Boden 8 gegenüberliegenden Seite, ist der Trichter 6 durch einen Deckel 9 verschlossen. Dieser läßt ersichtlich den Ausguß 3 im Bereich der Abdeckkappe 4 frei, erstreckt sich hingegen auf der gegenüberliegenden, nämlich der hinteren Seite, ein Stück weit über den Griff 2, so daß er dort im Griffbereich den Deckelgriffbereich 10 bildet. In diesem Deckelgriffbereich 10 befinden sich auf beiden Seiten Greifausnehmungen 11, 11'. Aus den Figuren 2 und 3 erkennt man, wie sich diese Greifausnehmungen 11 auch bis in den Griff 2 erstrecken. Der Benutzer kann mit Hilfe dieser muldenförmigen Greifausnehmungen 11, 11' den Deckel 9 bequem anheben und abnehmen, wenn dies gewünscht ist. Die Deckeloberfläche 12 hat eine ausgewählte Oberflächengenauigkeit, ist zum Beispiel glatt oder matt und ist leicht gekrümmt, um der gesamten Wasserreinigungsvorrichtung ein gefälliges Aussehen zu geben.

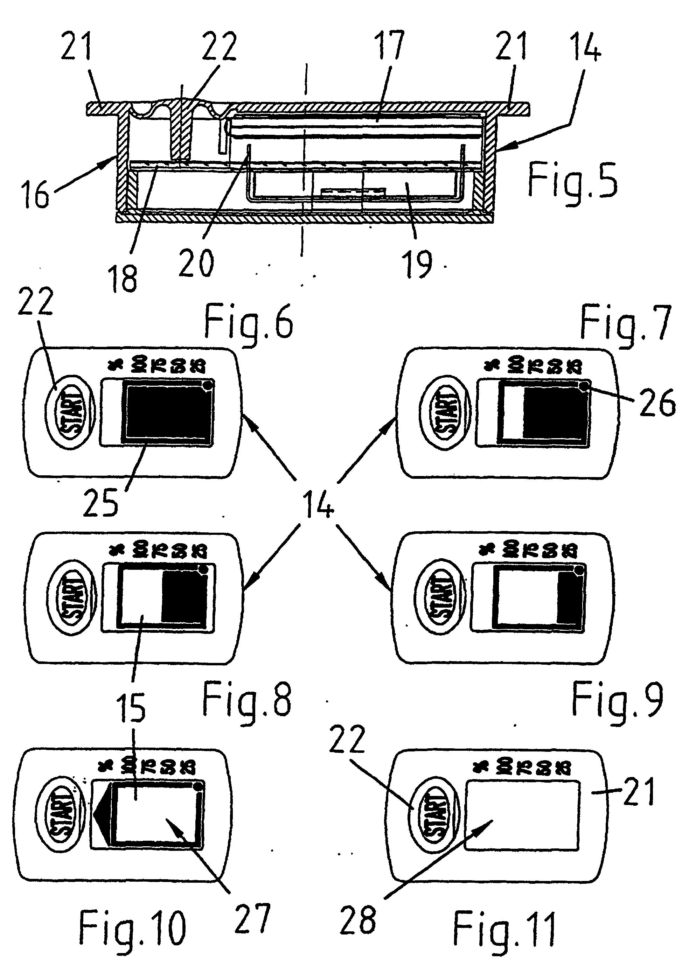

Von oben gesehen befindet sich in einer Öffnung 13 in der Deckeloberfläche 12 ein Anzeigegerät 14, dessen Anzeigefeld 15 von oben deutlich erkennbar und sichtbar ist. In den Figuren 6 bis 11 ist dieses Anzeigefeld 15 vergrößert dargestellt. Es wird durch das Fenster eines Gehäuses 16 mit Seitenwänden und Boden, die miteinander wasserdicht verschweißt sind, geformt. Das Anzeigefeld 15 wird durch ein Liquid Crystal Display LCD 17 gebildet. Dessen Steuerung erfolgt durch eine Schaltung, von welcher nur die Leiterplatte 18 (Printed Circuit Board, PCB) in Figur 5 gezeichnet ist. Die elektrische Versorgung erfolgt über die Batterie 19 mit Hilfe der Batteriekontakte 20.

Das Gehäuse 16 des Anzeigegerätes 14 ist oben mit einem rahmenförmigen Außenflansch 21 versehen. Dieser umgibt das Anzeigefeld 15, einschließlich der Drucktaste 22 und liegt im großen und ganzen bündig zu der Deckeloberfläche 12, wie man am besten in den Figuren 1 und 2 erkennt.

Zur besonders bequemen Handhabung ist auch im Deckelgriffbereich 10 für die Auflage zum Beispiel des Daumens der rechten Hand des Benutzers eine Mulde 23 angeordnet, um beim Schrägstellen der Wasserreinigungsvorrichtung beim Ausgießen den Deckel 9 fest auf der Auffangkanne 1 zu halten. Für eine gute Standfestigkeit derselben ist unter dem Boden 8 der Auffangkanne 1 ein Standring 24 aus einem Elastomeren angebracht. Weiterhin ist der Griff 2 in dem in Figur 1 mit der Kreuzschraffur versehenen Bereich mit einer Gummierung versehen.

Im Betrieb wird dem Benutzer geraten, ab der ersten Benutzung des Reinigungsmittels in der Filterpatrone den Druckknopf "START" zu drücken. Dann erscheint im Anzeigefeld 15 die in Figur 6 sichtbare Anzeige. Man erkennt einen äußeren Rahmen 25 mit einem Punkt 26. Die Fläche innerhalb des Rahmens 25 ist in vier Teile geteilt und bedeutet, daß jeder Balken ein Viertel der Gesamtzeit darstellt, die verstreichen darf, bis das Reinigungsmittel in der Filterpatrone erschöpft ist. Die Anzeige in Figur 6 zeigt daher vier Felder mit der Bedeutung, daß 100% der Zeit für die Benutzung des Reinigungsmittels zur Verfügung steht. Handelt es sich hierbei um vier Wochen, dann stellt jeder Balken die Zeitdauer von einer Woche dar. Nach einer Woche erscheint die Anzeige gemäß Figur 7. Ein Balken fehlt, und der Betrachter liest ab, daß noch 75% der Gesamtzeit für die Benutzung der eingesetzten Filterpatrone zur Verfügung steht. Um die Aufmerksamkeit des Betrachters zu erhöhen oder um sicher darzustellen, daß die Elektronik und die Anzeige funktionieren, kann der Punkt 26 in der Ecke des Rahmens blinken.

Nach zwei Wochen erscheint die Anzeige gemäß Figur 8 und nach drei Wochen die der Figur 9.

Es ist jetzt nur noch eine Woche Betriebszeit für die erste Filterpatrone zur Verfügung, so daß der Benutzer neues Reinigungsmittel in einer neuen Filterpatrone kaufen und sich auf Lager legen sollte. Nach Ablauf dieser letzten Wochen erscheint die Anzeige gemäß Figur 10. Der Pfeil 27 soll andeuten, daß der Rahmen, dessen dachartiger Pfeil links in Figur 10 und der Punkt rechts oben alle gleichzeitig blinken. Damit wird der Benutzer intensiv darauf aufmerksam gemacht, daß er bald die Filterpatrone auswechseln muß.

Schließlich verschwindet die Anzeige gemäß Darstellung in Figur 11, so daß das durch den Pfeil 28 angedeutete Anzeigefeld keine Darstellung enthält. Der Benutzer weiß jetzt spätestens, daß er die Filterpatrone nicht mehr benutzen, sondern durch neues Reinigungsmittel ersetzen sollte.

### Bezugszeichenliste

- 1: Auffangkanne
- 2: Griff
- 3: Ausguß
- 4: Abdeckkappe
- 5: Scharnier
- 6: Trichter
- 7: Hülse
- 8: Boden der Auffangkanne
- 9: Deckel
- 10: Deckelgriffbereich
- 11, 11': Greifausnehmungen
- 12: Deckeloberfläche
- 13: Öffnung
- 14: Anzeigegerät
- 15: Anzeigefeld
- 16: Gehäuse
- 17: Liquid Crystal Display LCD
- 18: Leiterplatte (Printed Circuit Board, PCB)
- 19: Batterie
- 20: Batteriekontakte
- 21: Außenflansch des Gehäuses
- 22: Drucktaste
- 23: Mulde
- 24: Standring
- 25: äußerer Rahmen des Gehäuses
- 26: Blinkpunkt des Rahmens
- 27: Pfeil
- 28: Pfeil

## Patentansprüche

1. Wasserreinigungsvorrichtung mit einer Auffangkanne (1) für gereinigtes Wasser, in der ein Trichter (6) mit einer mit Reinigungsmittel gefüllten Filterpatrone lösbar eingesetzt und die oben mit einem Deckel (9) verschließbar ist, wobei am Deckel Mittel (11, 11') zum Abnehmen des Deckels und Mittel zur Anzeige der Erschöpfung des Reinigungsmittels angeordnet sind, **dadurch gekennzeichnet, daß** das Erschöpfungsanzeigemittel (14, 15) ein in einer Öffnung (13) in der Deckeloberfläche (12) eingesetztes und unverlierbar befestigtes Anzeigegerät (14) ist, dessen Anzeigefeld (15) von außen oben sichtbar ist und das mittels einer elektronischen, batteriebetriebenen Schaltung (18) nur den jeweiligen Zustand der abgelaufenen Zeit darstellt, ohne mit separaten Signalgebern zusammenzuwirken.

2. Wasserreinigungsvorrichtung nach Anspruch 1, **dadurch gekennzeichnet, daß** sich das oben am Anzeigegerät (14) angebrachte Anzeigefeld (15) in der Mitte der Deckeloberfläche (12) befindet und die Mittel (11, 11') zum Abnehmen des Deckels (9) von dem Trichter (6) und/oder der Auffangkanne (1) im Randbereich der Deckeloberfläche (12) angeordnet sind.

3. Wasserreinigungsvorrichtung nach Anspruch 1 oder 2, **dadurch gekennzeichnet, daß** das Mittel (11, 11') zum Abnehmen des Deckels (9) In dem hinteren Deckelbereich (10) in Form von beidseitigen Greifausnehmungen (11, 11') angeordnet ist.

4. Wasserreinigungsvorrichtung nach einem der Ansprüche 1 bis 3, **dadurch gekennzeichnet, daß** das mit einem oberen Außenflansch (21) versehene Anzeigegerät (14) unter die Deckeloberfläche (12) derart versenkt ist, daß das Anzeigefeld (15) neben dem Außenflansch (21) etwa bündig zu der Deckeloberfläche (12) zu liegen kommt.

5. Wasserreinigungsvorrichtung nach einem der Ansprüche 1 bis 4, **dadurch gekennzeichnet, daß** innerhalb des rahmenförmigen Außenflansches (21) neben dem Anzeigefeld (15) eine Drucktaste (22) angeordnet ist.

6. Wasserreinigungsvorrichtung nach einem der Ansprüche 1 bis 5, **dadurch gekennzeichnet, daß** der Zustand der abgelaufenen Zeit durch in dem Anzeigefeld (15) sichtbare Balken, Felder oder Zeichen (25, 26) dargestellt wird und daß eine Blinkanzeige (Figuren 10 und 11) vorgesehen ist.

## Claims

1. A water purifying device comprising a canister (1) for collecting purified water, a funnel (6) and a filter cartridge filled with a purifying agent being releasably inserted into the canister, which is closable at the top by a lid (9), means (11, 11') for removing the lid and means for indicating when the purifying agent is used up being disposed on the lid, **characterised in that** the indicating means (14, 15) is a device (14) inserted and non-detachably fastened in an opening (13) in the top (12) of the lid, the indicating panel (15) of the device (14) being visible externally from above and, via an electronic battery-operated circuit (18) indicating only the amount of time which has elapsed, without co-operating with separate signal transmitters.

2. A water purifying device according to claim 1, **characterised in that** the indicating panel (15) at the top of the device (14) is in the middle of the lid surface (12), and the means (11, 11') for removing the cover (9) from the funnel (6) and/or the canister (1) are disposed in the edge region of the lid surface (12).

3. A water purifying device according to claim 1 or 2, **characterised in that** the means for removing the lid (9) are in the form of handle recesses (11, 11') on both sides in the rear region (10) of the lid.

4. A water purifying device according to any of claims 1 to 3, **characterised in that** the indicator device (14), which has an upper outer flange (21), is recessed under the lid surface (12) so that the panel (15) alongside the outer flange (21) is approximately flush with the lid surface (12).

5. A water purifying device according to any of claims 1 to 4, **characterised in that** a push-button (22) is disposed alongside the panel (15) inside the frame-like outer flange (21).

6. A water purifying device according to any of claims 1 to 5, **characterised in that** the amount of time elapsed is displayed in the form of bars, compartments or characters (25, 26) visible in the panel (15), and a flashing indicator (Figs. 10 and 11) is provided.

## Revendications

1. Dispositif de traitement de l'eau doté d'un pot collecteur (1) pour l'eau purifiée, dans lequel est inséré un entonnoir amovible (8) muni d'une cartouche filtre remplie d'un matériau purifiant et qui peut être fermé du dessus par un couvercle (9), des moyens (11, 11') pour retirer le couvercle et des moyens d'indication de l'épuisement du matériau purifiant étant disposés sur le couvercle, **caractérisé en ce que** le moyen d'indication de l'épuisement du matériau purifiant (14, 16) est un indicateur (14) inséré dans une ouverture (13) de la surface du couvercle (12) et fixé définitivement, dont le champ d'affichage (15) est visible de l'extérieur par le haut et qui représente seulement l'état respectif du temps écoulé, au moyen d'un circuit (18) électronique à piles, sans coopérer avec des postes transmetteurs de signaux.

2. Dispositif de traitement de l'eau selon la revendication 1, **caractérisé en ce que** le champ d'affichage (15) appliqué sur l'indicateur (14) se trouve au milieu de la surface du couvercle (12) et que les moyens (11, 11') pour retirer le couvercle (9) de l'entonnoir (6) et/ou du pot collecteur (1) sont disposés sur le bord du couvercle (12).

3. Dispositif de traitement de l'eau selon la revendication 1 ou 2, **caractérisé en ce que** le moyen (11, 11') pour retirer le couvercle (9) est disposé sur la partie arrière (10) du couvercle sous forme d'évidements de prise (11, 11') des deux côtés

4. Dispositif de traitement de l'eau selon l'une des revendications 1 à 3, **caractérisé en ce que** l'indicateur (14) muni d'une bride extérieure supérieure (21) est abaissé sous la surface du couvercle (12) de telle sorte que le champ d'affichage (15) se situe à côté de la bride extérieure (21), pratiquement à fleur avec la surface du couvercle (12).

5. Dispositif de traitement de l'eau selon l'une des revendications 1 à 4, **caractérisé en ce qu'**une touche (22) est placée dans la bride extérieure supérieure (21) en forme de cadre, à côté du champ d'affichage (15).

6. Dispositif de traitement de l'eau selon l'une des revendications 1 à 5, **caractérisé en ce que** l'état du temps écoulé est représenté par des barres, des champs ou des signes (25, 26) apparaissant dans le champ d'affichage (15) et **en ce qu'**un affichage clignotant (figures 10 et 11) est prévu.
